# EUROPÄISCHE PATENTANMELDUNG

(11) **EP 2 431 565 A1**
(43) Veröffentlichungstag der Anmeldung: **21.03.2012**
(21) Anmeldenummer: 11007147.9
(22) Anmeldetag: 02.09.2011
(51) Int. Cl.: E21B 12/02, B23B 51/00

(54) **Hartmetallkopf für ein Werkzeug zum Bearbeiten von Feststoffmaterial**

(30) Priorität: 15.09.2010 DE 102010045388
(71) Anmelder: Irwin Industrial Tools GmbH, 85399 Hallbergmoos (DE)
(72) Erfinder: Pedersen, Hans, 7760 Hurup (DK); Eggers, Rainer, 84439 Steinkirchen (DE); Geier, Manfred, 82178 Puchheim (DE)
(74) Vertreter: Schmid, Nils T.F.

(57) **Zusammenfassung**

Bei einem Hartmetallkopf für ein Werkzeug zum Bearbeiten von Feststoffmaterial, wie Gestein, Beton, der zum Befestigen an einem Ende eines Schafts des Werkzeugs ausgelegt ist und eine dem zu bearbeitenden Feststoffmaterial zuzuwendende Stirnfläche sowie eine im wesentlichen längs des Schaftes, vorstehende Seitenfläche aufweist, ist vorgesehen, dass in der Stirnfläche und/oder in der Seitenfläche eine als eine Vertiefung und/oder Erhebung ausgebildete Verschleißmarkierung eingearbeitet ist.

## Beschreibung

Die Erfindung betrifft einen Hartmetallkopf für ein Werkzeug zum Bearbeiten von Feststoffmaterial, wie Gestein, Beton oder dergleichen, insbesondere einen Hartmetallbohrkopf, der für einen Bohrer verwendet werden soll.

Es ist bekannt, einen Hartmetallkopf separat zu einem Schaft des Werkzeugs herzustellen und anschließend an einem Ende des Schafts zu befestigen. Ein derartiger Hartmetallkopf ist beispielsweise aus DE 100 24 435 B4 bekannt, bei dem der Hartmetallkopf als Schneidplatte mit einer dachförmigen Stirnfläche und vier Seitenflächen ausgeführt ist, von denen zwei sich gegenüberliegende Seitenflächen kurz und zwei lang sind. Die Stirnfläche wird von einer sich im Wesentlichen radial erstreckenden Hauptschneidkante in eine Vorlaufstirnfläche sowie eine Nachlaufstirnfläche unterteilt. Die Hartmetallschneidplatte ist in einen am Ende des Schafts eingearbeiteten Lotspalt eingesetzt und mittels Lotmaterial befestigt. An einer stirnseitigen Fläche des Bohrerschafts ist eine konzentrisch zur Drehachse eingearbeitete, kreisförmige mit Lot gefüllte Rille als Verschleißmarkierung eingearbeitet. Je nach Abtragung des Lots aus der Vertiefung durch Arbeitseinsatz des Werkzeugs können indirekt Rückschlüsse über den Verschleiß des Werkzeugs und dessen Funktionsfähigkeit gezogen werden. Es zeigte sich, dass eine Verschleißmarkierung am Schaft je nach Einsatz des Werkzeugs entweder einen Verschleißzustand angibt, der drastischer als der tatsächlich vorliegende Verschleißzustand ist oder eine ausreichende Funktionsfähigkeit suggeriert, obwohl diese der tatsächlichen Funktionsfähigkeit nicht entspricht.

Es ist Aufgabe der Erfindung, die Nachteile des Stands der Technik zu überwinden, insbesondere ein Werkzeug zum Bearbeiten eines Feststoffmaterials, wie Gestein oder Beton, insbesondere einen Bohrer bereitzustellen, wobei die ausreichende Funktionsfähigkeit unmittelbar und eindeutig an dem Werkzeug selbst erkennbar ist, ohne ein Analysemittel- oder Verfahren einsetzen zu müssen und ohne insbesondere das Werkzeug strukturell stark beeinflussen zu müssen.

Diese Aufgabe wird durch die Merkmale von Anspruch 1 gelöst.

Danach ist ein Hartmetallkopf für ein Werkzeug zum Bearbeiten von Feststoffmaterial, wie Gestein, Beton, vorgesehen, der zum Befestigen an einem Ende eines Schafts des Werkzeugs ausgelegt ist. Der erfindungsgemäße Hartmetallkopf umfasst eine dem zu bearbeitenden Feststoffmaterial zuzuwendende Stirnfläche sowie eine im Wesentlichen längs des Schaftes, vorstehende Seitenfläche. Erfindungsgemäß ist in der Stirnfläche und/oder in der Seitenfläche eine als eine Vertiefung und/oder Erhebung ausgebildete Verschleißmarkierung eingearbeitet. Erst durch das Vorsehen einer Verschleißmarkierung in dem Hartmetallkopf selbst kann ein direkter Rückschluss auf den Verschleißzustand des Werkzeugs geschlossen werden. Es zeigte sich, dass der Abrieb des Schaftes des Werkzeugs für die Bestimmung des Verschleißzustands unerheblich ist. Gemäß der Erfindung wurde erkannt, dass überraschenderweise der Abrieb des sehr harten Metallkopfs eindeutig und unmittelbar den Verschleißzustand angeben kann. Eine besonders genaue Aussage über den Verschleißzustand kann dann getroffen werden, wenn eine Verschleißmarkierung sowohl an einer Seitenfläche als auch an einer Stirnfläche des Hartmetallkopfs angeordnet ist. Der Verlauf des Verschleißes an der Stirnfläche sowie an der Seitenfläche ist unterschiedlich. Erst bei Erreichen einer gewissen Verschleißkonstellation an der Stirnfläche und an der Seitenfläche kann ein genauer Zeitpunkt angegeben werden, wann das Werkzeug an sich unbrauchbar ist oder zumindest für nur noch bestimmte Einsatzbereiche geeignet ist. Überraschenderweise erwies sich die Anordnung der Verschleißmarkierung an einer Seitenfläche als eine besonders genaue Indizierung des Verschleißzustands des Werkzeugs. Gerade an der Seitenfläche konnte ein besonders gleichmäßiger Verschleißverlauf je nach Abrieb und damit Verkleinerung der Vertiefung und/oder Erhebung erkannt werden.

Bei einer bevorzugten Ausführung der Erfindung ist die Verschleißvertiefung frei und unbelegt von jeglichem Verschleißindiziermaterial, wie einem Lot. Es zeigte sich, dass der Abrieb des überaus harten Materials des Hartmetallkopfs einen kontinuierlichen, vorhersehbaren Verschleißverlauf angibt, so dass allein durch die Veränderung einer geometrischen Größe der Vertiefung und/oder Erhebung, wie die Tiefe bzw. Höhe, die Breite oder ein Krümmungsverlauf eines Vertiefungsbodens, genaueste Rückschlüsse über den Verschleißzustand deutlich macht. Mit der erfindungsgemäßen Maßnahme, freie und unbelegte Vertiefungen und/oder mit dem Hartmetallkopf einstückig ausgebildete Erhebungen als Verschleißmarkierung vorzusehen, ist auch ein erhebliches Fehlbeurteilungspotential reduziert, weil sich zeigte, dass eine beispielsweise mit Lot versehene Vertiefung häufig abhängig von dem zu bearbeitenden Feststoffmaterial mehr oder weniger stark herausgebrochen wird, ohne dass dies einen Hinweis auf einen erhöhten Verschleiß darstellt.

Bei einer bevorzugten Ausführung der Erfindung erstreckt sich eine seitenflächige Vertiefung und/oder Erhebung im Wesentlichen geradlinig, vorzugsweise parallel zu einer Axialrichtung des Schaftes und/oder eine stirnflächige Vertiefung und/oder Erhebung radial hin zu einer Drehachse des Schaftes. Es zeigte sich, dass diese Positionierung und Verformung der Verschleißmarkierungsvertiefung und/oder -erhebung einen abschließenden Blick auf den Verschleißzustand geben kann, selbst wenn ein inhomogenes Feststoffmaterial zu bearbeiten war. Vorzugsweise gehen die seitenflächige Vertiefung und/oder Erhebung und die stirnflächige Vertiefung und/oder Erhebung unterbrechungsfrei und/oder an einer Übergangskante zwischen der Stirnfläche und der Seitenfläche ineinander über. Der Übergang der stirnflächigen und der seitenflächigen Verschleißmarkierungsvertiefung und/oder -erhebung ist ein besonders interessanter Indikator für den Verschleißzustand des Werkzeugs. Am Übergang treffen unterschiedliche Belastungsarten, nämlich die hohe Drucklast an der Stirnfläche und die hohe Querlast an der Seitenfläche aufeinander. Es zeigte sich am Übergangsbereich ein drittes von dem Verschleißzustand der stirnflächigen Vertiefung und/oder Erhebung und der seitenflächigen Vertiefung und/oder Erhebung unterschiedliches Verschleißbild. Alle drei Verschleißbilder, nämlich der stirnflächigen Vertiefung und/oder Erhebung, der seitenflächigen Vertiefung und/oder Erhebung und des Vertiefungs- oder Erhebungsübergangs sind Indikatoren zur Bestimmung eines eindeutigen Verschleißzustands.

Bei einer bevorzugten Ausführung der Erfindung erstreckt sich eine stirnflächige Vertiefung nur über einen Teil des Radialabstands zwischen einen drehachsigen Mittelpunkt der Stirnfläche und einer radialen Endkante. Auf diese Weise ist sichergestellt, dass durch die Verschleißmarkierung, wenn überhaupt, eine Beeinflussung der Werkzeugeffektivität ausgeschlossen ist. Außerdem zeigte sich, dass ein teilweises Ausbilden der Stirnfläche mit einer Vertiefung bereits ausreichende Informationen über den Verschleißzustand des Werkzeugs geben kann.

Vorzugsweise erreicht die Stirnflächenvertiefung den drehachsigen Mittelpunkt nicht. Die stirnflächige Vertiefung soll sich insbesondere nur über höchstens ein Drittel des maximalen Abstands zwischen dem drehachsigen Mittelpunkt der Stirnfläche und einer radialen Endkante der Stirnfläche erstrecken.

Bei einer bevorzugten Ausführung der Erfindung erstreckt sich eine seitenflächige Vertiefung und/oder Erhebung über mehr als die Hälfte, vorzugsweise über die gesamte Länge zwischen einer Übergangskante zwischen der Stirnfläche und der Seitenfläche und einer axialen Endkante der Seitenfläche, der maximalen axialen Ausdehnung der Seitenfläche. Es zeigte sich, dass im axialen Verlauf der Seitenfläche derart unterschiedliche Belastungszustände abhängig von dem zu bohrenden Feststoffmaterial auftreten, dass eine Funktionsunfähigkeit des Werkzeugs bereits dann entstehen kann, wenn nur ein Teil der Seitenfläche zu stark beschädigt ist. Vorzugsweise ist eine seitenflächige Vertiefung und/oder Erhebung in einer Umfangsrichtung mittig innerhalb der Seitenfläche positioniert.

Bei einer Weiterbildung der Erfindung ist die Vertiefung als Rinne und/oder die Erhebung als Rippe ausgebildet, deren Querschnitt in deren Verlauf in Längsrichtung sich vorzugsweise nicht ändert. Vorzugsweise ist die Rinne geradlinig ausgeführt und umfasst eine konstante Tiefe in deren Längsrichtung. Die Rinne hat einen Rinnenboden, der vorzugsweise konkav, insbesondere in einer gleichbleibenden Krümmung, geformt ist. Vorzugsweise ist die Rippe geradlinig ausgeführt und weist eine konstante Höhe in deren Längsrichtung auf. Die Rippe hat einen Rippenrücken, der vorzugsweise konvex, insbesondere in einer gleichbleibenden Krümmung geformt ist. Diese Vertiefungs- und/oder Erhebungsform zeigte sich als besonders geeignet, um den Verschleißzustand eindeutig und unmittelbar visuell zu identifizieren.

Bei einer bevorzugten Ausführung der Erfindung ist der Hartmetallkopf als eine Schneidplatte geformt. Die Schneidplatte hat eine dachförmige Stirnfläche, zwei sich gegenüberliegende Kurzseitenflächen, zwei sich gegenüberliegende Langseitenflächen und eine der Stirnfläche gegenüberliegende, dem Schaft zuzuwendende Montageseite. Vorzugsweise ist eine Vertiefung und/oder Erhebung ausschließlich an einer der beiden Kurzseitenflächen ausgebildet. Es kann auch vorgesehen sein, die Vertiefung und/oder Erhebung an beiden Kurzseiten der Flächen vorzusehen, um einen möglichst abschließenden Eindruck über den Verschleißzustand zu erhalten. Bei einer bevorzugten Weiterbildung der Erfindung ist der Hartmetallkopf in einer Kreuz- oder X-Form mit vier sich von einer gemeinsamen Mitte, die eine axiale Drehachse durchsetzt, wegerstreckenden Armen gestaltet. Dabei können die stirnflächige Vertiefung und/oder Erhebung und/oder die seitenflächige Vertiefung und/oder Erhebung ausschließlich an einem der Arme oder an zwei sich gegenüberliegenden Armen ausgebildet sein. Auf diese Weise kann ein vollständiges Bild über den Verschleißzustand erhalten sein.

Bei einer bevorzugten Ausführung der Erfindung hat die Stirnseite eine sich im Wesentlichen über die ganze radiale Ausdehnung der Stirnfläche erstreckende Hauptschneidkante. Die Hauptschneidkante unterteilt die Stirnfläche richtungsgemäß in eine Vorlaufstirnfläche und eine Nachlaufstimfläche. Vorzugsweise ist die stirnflächige Vertiefung und/oder Erhebung insbesondere mittig in der Nachlaufstimfläche eingearbeitet. Es zeigte sich, dass vor allem die Nachlaufstimfläche geeignet ist, Aussagen über den Verschleißzustand des Werkzeugs zu geben.

Des Weiteren betrifft die Erfindung ein Werkzeug, insbesondere einen Bohrer, zum Bearbeiten von Feststoffmaterial, wie Gestein, Beton. Das Werkzeug hat einen Schaft und einen erfindungsgemäßen an dem Schaftende zu befestigenden Hartmetallkopf. Es sei klar, dass die Erfindung auch ein Werkzeug betreffen soll, das vollständig aus einem Hartmetall gebildet ist, also beispielsweise der Hartmetallkopf und der Schaft aus einem Hartmetallstück gebildet ist.

Weitere Eigenschaften, Vorteile und Merkmale der Erfindung werden durch die folgende Beschreibung einer bevorzugten Ausführung anhand der beiliegenden Zeichnungen deutlich, in denen zeigen:
- Figur 1a: eine perspektivische Ansicht einer ersten Ausführung eines erfindungs-gemäßen Hartmetallkopfs;
- Figur 1b: eine Seitenansicht auf eine umfangssenkrechte Seitenfläche des Hartme-tallkopfs gemäß Figur 1a;
- Figur 1c: eine Seitenansicht auf eine Peripherieseite des Hartmetallkopfs gemäß Figur 1 a;
- Figur 1d: eine Draufsicht auf eine Stirnseite des Hartmetallkopfs 1a;
- Figur 2a: eine perspektivische Ansicht einer zweiten Ausführung eines erfindungs-gemäßen Hartmetallkopfs;
- Figur 2b: eine Seitenansicht auf eine umfangssenkrechte Seitenfläche des Hartme-tallkopf gemäß Figur 2a;
- Figur 2c: eine Seitenansicht auf die Peripherieseite des Hartmetallkopfs gemäß Figur 2a;
- Figur 2d: eine Draufsicht auf die Stirnseite des Hartmetallkopfs 2a;
- Figur 3a: eine perspektivische Ansicht einer dritten Ausführung eines erfindungs-gemäßen Hartmetallkopfs;
- Figur 3b: eine Seitenansicht auf eine umfangssenkrechte Seitenfläche des Hartme-tallkopf gemäß Figur 3a;
- Figur 3c: eine Seitenansicht auf die Peripherieseite des Hartmetallkopfs gemäß Figur 3a;
- Figur 3d: eine Draufsicht auf die Stirnseite des Hartmetallkopfs 3a;
- Figur 4a: eine perspektivische Ansicht einer vierten Ausführung eines erfindungs-gemäßen Hartmetallkopfs;
- Figur 4b: eine Seitenansicht auf eine umfangssenkrechte Seitenfläche des Hartme-tallkopf gemäß Figur 4a;
- Figur 4c: eine Seitenansicht auf die Peripherieseite des Hartmetallkopfs gemäß Figur 4a;
- Figur 4d: eine Draufsicht auf die Stirnseite des Hartmetallkopfs 4a;
- Figur 5: eine perspektivische Ansicht einer fünften Ausführung eines erfindungs-gemäßen Hartmetallkopfs;
- Figur 6: eine perspektivische Ansicht einer sechsten Ausführung eines erfin-dungsgemäßen Hartmetallkopfs;
- Figur 7: eine perspektivische Ansicht einer siebten Ausführung eines erfindungs-gemäßen Hartmetallkopfs;
- Figur 8: eine perspektivische Ansicht einer achten Ausführung eines erfindungs-gemäßen Hartmetallkopfs;
- Figur 9: eine perspektivische Ansicht einer neunten Ausführung eines erfindungs-gemäßen Hartmetallkopfs;
- Figur 10a: eine perspektivische Ansicht einer zehnten Ausführung eines erfindungs-gemäßen Hartmetallkopfs;
- Figur 10b: eine Seitenansicht einer ersten Seitenfläche des Hartmetallkopfs gemäß 10a;
- Figur 10c: eine Seitenansicht auf eine zweite, senkrecht zur ersten Seitenfläche ste-hende Seitenfläche des Hartmetallkopfs gemäß Figur 10a;
- Figur 10d: eine Draufsicht auf die Stirnfläche des Hartmetallkopfs gemäß 10a.
- Figur 11a: eine perspektivische Ansicht einer elften Ausführung eines erfindungs-gemäßen Hartmetallkopfs;
- Figur 11b: eine Seitenansicht einer ersten Seitenfläche des Hartmetallkopfs gemäß 11a;
- Figur 11c: eine Seitenansicht auf eine zweite, senkrecht zur ersten Seitenfläche ste-hende Seitenfläche des Hartmetallkopfs gemäß Figur 11a;

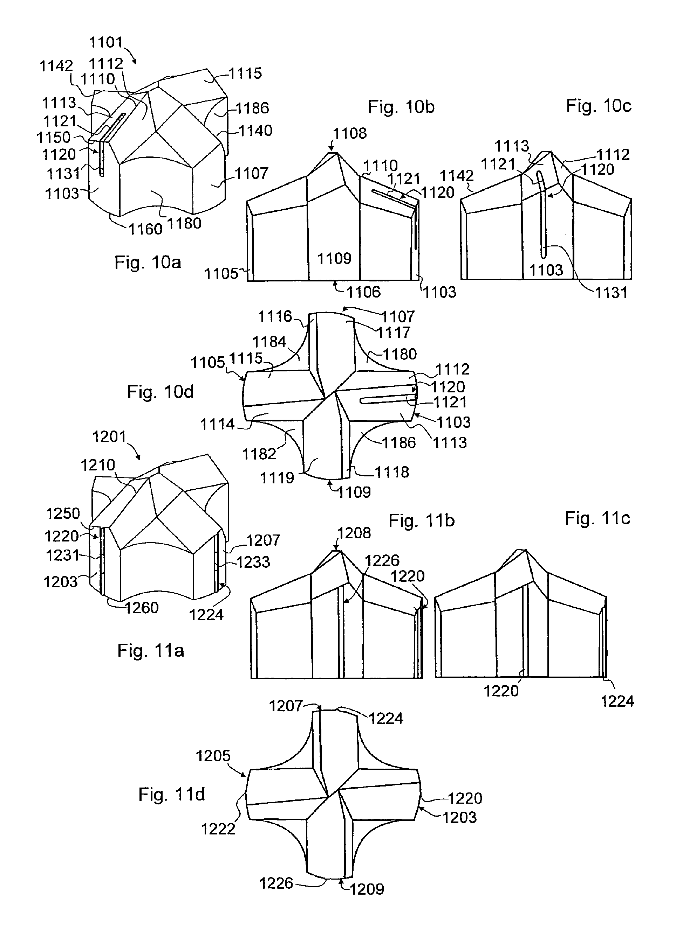

- Figur 11 d: eine Draufsicht auf die Stirnfläche des Hartmetallkopfs gemäß 11a.

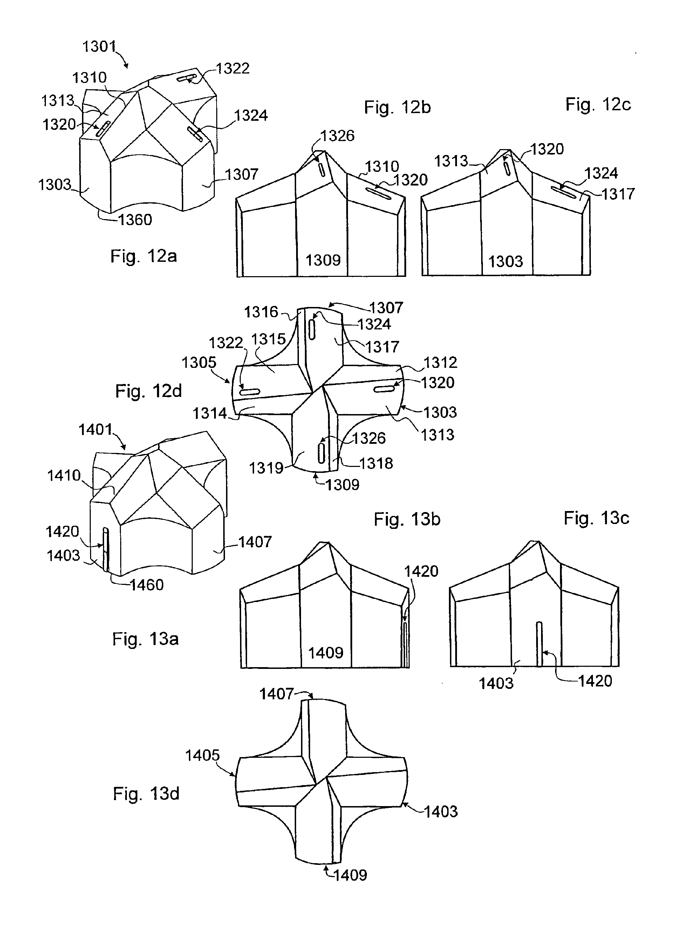

- Figur 12a: eine perspektivische Ansicht einer zwölften Ausführung eines erfin-dungsgemäßen Hartmetallkopfs;
- Figur 12b: eine Seitenansicht einer ersten Seitenfläche des Hartmetallkopfs gemäß 12a;
- Figur 12c: eine Seitenansicht auf eine zweite, senkrecht zur ersten Seitenfläche ste-hende Seitenfläche des Hartmetallkopfs gemäß Figur 12a;
- Figur 12d: eine Draufsicht auf die Stirnfläche des Hartmetallkopfs gemäß 12a.
- Figur 13a: eine perspektivische Ansicht einer dreizehnten Ausführung eines erfin-dungsgemäßen Hartmetallkopfs;
- Figur 13b: eine Seitenansicht einer ersten Seitenfläche des Hartmetallkopfs gemäß 13a;
- Figur 13c: eine Seitenansicht auf eine zweite, senkrecht zur ersten Seitenfläche ste-hende Seitenfläche des Hartmetallkopfs gemäß Figur 13a;
- Figur 13d: eine Draufsicht auf die Stirnfläche des Hartmetallkopfs gemäß 13a.

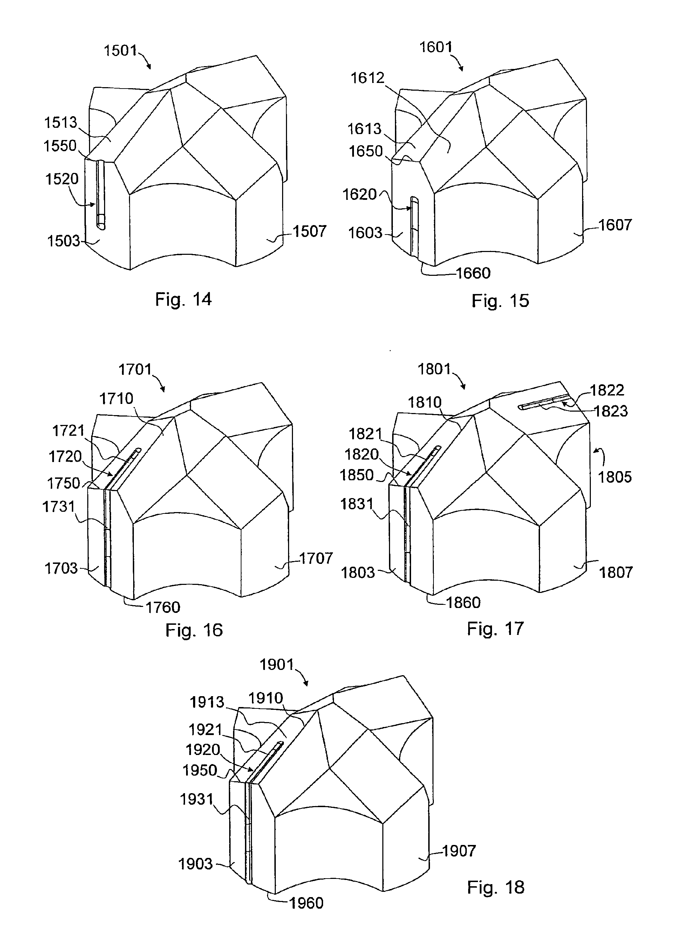

- Figur 14: eine perspektivische Ansicht einer vierzehnten Ausführung eines erfin-dungsgemäßen Hartmetallkopfs;
- Figur 15: eine perspektivische Ansicht einer fünfzehnten Ausführung eines erfin-dungsgemäßen Hartmetallkopfs;
- Figur 16: eine perspektivische Ansicht einer 16. Ausführung eines erfindungsge-mäßen Hartmetallkopfs;
- Figur 17: eine perspektivische Ansicht einer 17. Ausführung eines erfindungsge-mäßen Hartmetallkopfs;
- Figur 18: eine perspektivische Ansicht einer 18. Ausführung eines erfindungsge-mäßen Hartmetallkopfs.

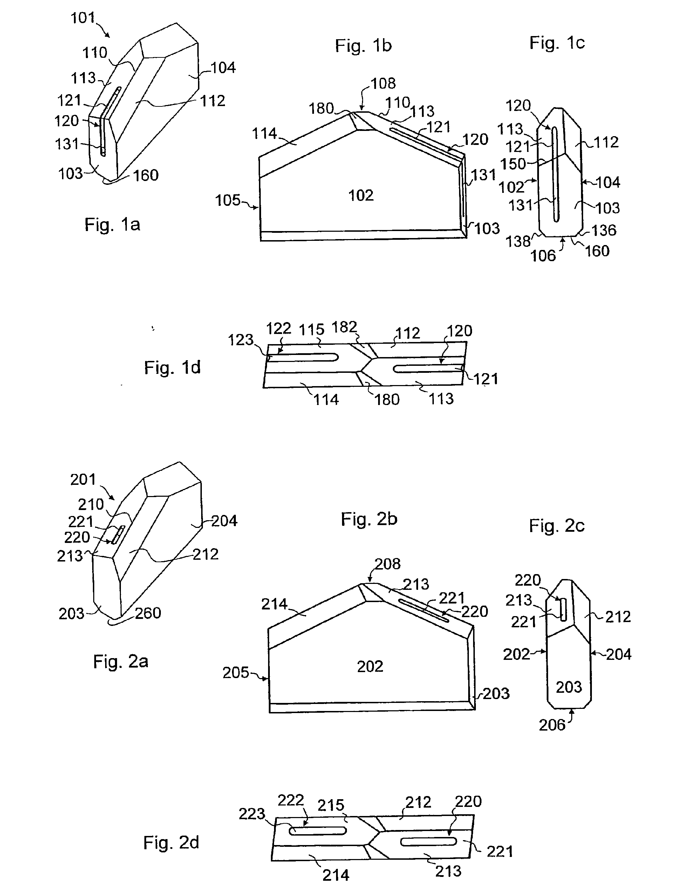

In den Figuren 1a bis 1d ist eine erste Ausführung des erfindungsgemäßen Hartmetallkopfs im Allgemeinen mit der Bezugsziffer 101 versehen. Der Hartmetallkopf 101 ist aus einem Hartmetallstück oder einer Hartmetallplatte als einteiliger Körper gefertigt und bildet als Schneidplatte einen Bohrkopf, beispielsweise für einen Gesteinsbohrer. Der Hartmetallbohrkopf 101 hat zwei diametral gegenüber liegende Langseitenflächen 102, 104, die im Wesentlichen parallel zum Bohrerdurchmesser verlaufen, zwei diametral gegenüber liegende Kurzseitenflächen 103, 105, die im Wesentlichen tangential zum Bohrerumfang verlaufen, eine Montageseite 106, die zum Stirnende eines Schafts eines nicht näher dargestellten Bohrwerkzeugs weist, sowie eine Stirnfläche 108, entlang einer Hauptschneidkante 110 verläuft.

Wie insbesondere in der Figur 1d ersichtlich ist, umfasst die Stirnfläche 108 im Wesentlichen vier durch die Schneidkante 110 gegliederte Stirnflächenabschnitte, zwei punktsymmetrische gegenüber liegende Vorlaufstirnflächen 112, 114 und zwei punktsymmetrisch gegenüber liegende Nachlaufstirnflächen 113, 115. Die Schneidkante 110 ist die Scheitellinie zwischen den Vorlaufstirnflächen 112, 114 und den Nachlaufstirnflächen 113, 115. Ein Übergang zwischen den Nachlaufstirnflächen 113, 115 und den Vorlaufstirnflächen 112, 114 ist durch Verbindungsflächen 180, 182 gebildet.

Wie in Figur 1b ersichtlich, verläuft die Schneidkante 110 dachförmig entlang der Hartmetallplatte. Eine Vertiefung 120 umfasst einen Axialabschnitt 131, der sich entlang der Kurzseitenfläche 103 in Axialrichtung erstreckt und einen Stirnseitenabschnitt 121, der sich parallel zur Hauptschneidkante 110 entlang der Nachlaufstirnfläche 113 erstreckt. Der Axialabschnitt 131 geht an einer Verbindungskante 150 zwischen Kurzseitenfläche 103 und Nachlaufstimfläche 113 direkt in den Stirnflächenabschnitt 121 über. Die Vertiefung 120 ist als U-Nut oder Rinne in die Schneidplatte eingeformt, so dass zwischen den Seitenwandabschnitten der Vertiefung 120 und dem Boden der Vertiefung 120 ein stufenloser Übergang besteht. Die Vertiefung 120 ist mittelachsenseitig und montageflächenseitig durch Innenbegrenzungsflächen abgeschlossen, die ebenfalls stufenlos in den Boden der Vertiefung 120 übergehen. Die Vertiefung 120 ist im Wesentlichen wannenförmig. Diese eckenlose Ausführung der Vertiefung 120 gewährleistet eine homogene Kraftverteilung in der Hartmetallplatte, so dass Spannungsspitzen in dem Hartmetallbohrkopf vermieden werden.

Figur 1c ist zu entnehmen, dass sich der Axial- oder Kurzseitenabschnitt 131 der Vertiefung 120 über 5/6 der axialen Gesamtkurzflächenlänge erstreckt und entlang des Umfangs bezogen auf die Kurzseitenfläche außermittig in Richtung der Nachlaufstimfläche 131 versetzt ist. Der Stimflächenabschnitt 121 der Vertiefung 120 erstreckt sich über 2/3 der Nachlaufstirnfläche 113, wie in den Figuren 1b, 1d gezeigt ist.

Obwohl aus Gründen der Einfachheit der Darstellung in Figur 1 a lediglich eine Vertiefung 120 dargestellt ist, sollte verstanden werden, dass bei allen Ausführungsformen auch mehrere Vertiefungen oder Erhebungen vorgesehen sein können, wie beispielsweise in Figur 1d gezeigt ist.

Die Hartmetallschneidplatte 101 kann in einen nicht dargestellten Bohrerschaft, der in dessen Stirnseite einen Spalt aufweist, eingesetzt werden. Die Hartmetallplatte wird in den Bohrerschaft eingelötet. Um die Montagefläche zu vergrößern, sind die Übergangskanten zwischen den Langseitenflächen 102, 104 und der Montagefläche 106 gefast, so dass zusätzliche Montageflächen 136, 138 für eine stärkere Befestigung im Bohrerschaft entstehen. Dreht sich nun ein Bohrer mit einem erfindungsgemäßen Hartmetallkopf in Gestein, Beton oder anderem Feststoffmaterial, so verschleißt der Hartmetallbohrkopf insbesondere an den Flächen und Kanten, die an dem Bohrgut permanent reiben. Einerseits wirkt auf die Schneidkante 110 eine hohe Drucklast und reibt das abgetragene Bohrgut permanent über die Nachlaufstirnflächen 113, 115 und Kurzseitenflächen 103, 105 hinweg. Andererseits treten beim Bohren Belastungsspitzen sowohl in Axialrichtung des Bohrers als auch in Querrichtung der Hartmetallschneidplatte auf. Der Übergang von den Kurzseitenflächen 103, 105 zu den Stimseitenflächen 112, 113, 114, 115, an dem beide Belastungskomponenten zusammenfallen, unterliegt daher unter Umständen einem besonders hohem Verschleiß. Das Verschleißbild an der Übergangskante 150 entwickelt sich dementsprechend unabhängig von der reinen Druckbelastung oder Querbelastung des Bohrkopfs.

Die Vertiefung 120 stellt einen Verschleißindikator für alle drei Verschleißarten unabhängig voneinander bereit. Damit kann auch bei einem Bohrer, der nur für spezielle Bohraufgaben eingesetzt wird, jederzeit eine Aussage über den tatsächlichen Verschleiß getroffen werden.

In den Figuren 2a bis 2d ist eine zweite erfindungsgemäße Ausführung eines Hartmetallbohrkopfs dargestellt, wobei zur besseren Lesbarkeit der Figurenbeschreibung und zur Vermeidung von Wiederholungen für identische und ähnliche Bestandteile des Hartmetallkopfes der zweiten Ausführung die gleichen Bezugsziffern wie bei der Ausführung gemäß den Figuren 1a bis 1d verwendet wurden, die um 100 erhöht sind.

Der Hartmetallkopf 201 unterscheidet sich von dem Hartmetallkopf 101 gemäß Figur 1 darin, dass die Vertiefung 220, 222 lediglich aus dem Stimflächenabschnitt 221, 223 besteht, sich aber nicht bis zum äußersten radialen Rand 250 erstreckt und nicht in den Kurzseitenflächen 203, 205 in Axialrichtung fortsetzt. Die Vertiefungsrinne 220, 222 erstreckt sich im Wesentlichen parallel zu der Schneidkante 210 über 3/5 der Gesamtlänge der Nachlaufstirnflächen 213, 215. Wie in Figur 2d ersichtlich ist, können mehrere Vertiefungen 220, 222 punktsymmetrisch auf der Stirnfläche der Hartmetallplatte angeordnet sein.

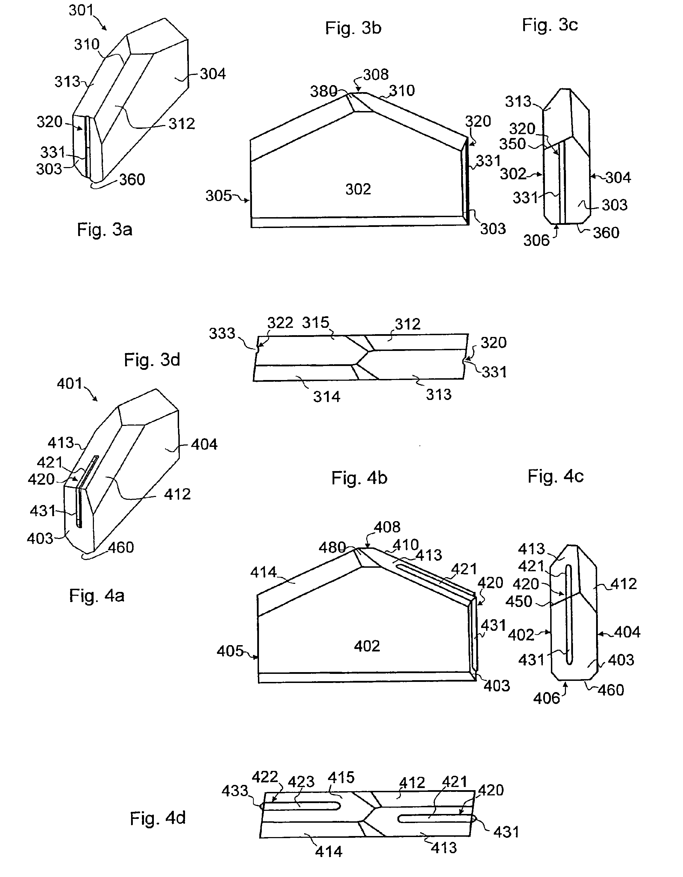

In den Figuren 3a bis 3d ist eine dritte bevorzugte Ausführung eines Hartmetallkopfs dargestellt, wobei zur besseren Lesbarkeit der Figurenbeschreibung für gleiche oder ähnliche Bestandteile die gleichen Bezugsziffern wie bei den zuvor beschriebenen Hartmetallköpfen 101, 201 verwendet werden, die um 100 bzw. 200 erhöht sind.

Der Bohrkopf gemäß den Figuren 3a bis 3d unterscheidet sich von dem Bohrkopf 101 im Wesentlichen darin, dass die Vertiefung 320, 322 lediglich den Axialabschnitt 331, 333 aufweist, der sich axial entlang der gesamten Länge der Kurzseitenfläche 303, 305 als eine Rinne erstreckt. Die Rinne ist dabei weder montageflächenseitig noch stirnflächenseitig begrenzt, sondern öffnet sich in die Montagefläche 306 und in die Nachlaufstirnfläche 313, 315 jeweils halbkreisförmig. Da sich der Verschleißmarker entlang der gesamten Kurzseitenfläche 303, 305 erstreckt, ist es möglich, auch einen teilweisen, ungleichmäßigen Verschleiß in nur vereinzelten Bereichen der Kurzseitenfläche festzustellen. Dies ist besonders hilfreich, da so vermieden werden kann, dass ein entlang der Kurzseitenfläche ungleichmäßig geformter Bohrkopf zum Einsatz kommt, der aufgrund eines unruhigen Laufes im Bohrloch und einer eventuellen Rillenbildung im Bohrloch das Bohrergebnis negativ beeinflussen würde.

Die Figuren 4a bis 4d zeigen eine vierte bevorzugte Ausführung des erfindungsgemäßen Hartmetallkopfs, wobei zur besseren Lesbarkeit der Figurenbeschreibung für gleiche oder ähnliche Bauteile die identischen Bezugsziffern zu den zuvor erwähnten Hartmetallbohrköpfen 101, 201, 301 verwendet werden, die um 100, 200 bzw. 300 erhöht sind.

Der Bohrkopf 401 unterscheidet sich von dem Bohrkopf 101 gemäß den Figuren 1a bis 1d darin, dass der Verschleißmarker als eine Erhebung 420, 422 oder Rippe aus der Kurzseitenfläche 403, 405 und der Nachlaufstimfläche 413, 415 heraus ausgebildet ist. Ein axialer Abschnitt 431, 433 des Verschleißmarkers 420, 422 erstreckt sich als Linearrippe axial entlang der Kurzseitenfläche 403, 405 auf einer Länge von etwa 5/6 der gesamten axialen Länge der Kurzseitenfläche bis zur Übergangskante 450, an der die Kurzseitenfläche 403, 405 in die Nachlaufstirnfläche 413, 415 mündet. Von der Übergangskante 450 setzt sich die Rippe in einem Stimflächenabschnitt 421, 423 im Wesentlichen parallel zur Schneidkante 410 fort. Obwohl in Figur 4a aufgrund der vereinfachten Darstellung lediglich ein Verschleißmarker 420 gezeigt ist, sollte verstanden werden, dass punktsymmetrisch zur Mittelachse des Hartmetallbohrkopfs ein zweiter Verschleißmarker 422 vorgesehen sein kann, wie in Figur 4d dargestellt. Die Axialabschnitte 431, 433 der Verschleißmarker 420, 422 stehen in Radialrichtung nicht über den durch die Langseitenflächen 402, 404 bestimmten Querdurchmesser des Hartmetallbohrkopfs hervor. Ebenso stehen die Stirnflächenabschnitte 421, 423 des Verschleißmarkers 420, 422 hinter dem durch die Schneidkante 410 definierten Bohrkegel zurück, so dass die Bohrfunktion durch die Erhebung 420, 422 des Verschleißmarkers nicht beeinträchtigt ist. Die Rippe 420, 422 ist mit der Hartmetallschneidplatte aus einem Stück gefertigt. Dazu kann beispielsweise eine entsprechende Matrizenform bei der Produktion der Karbidplatte eingesetzt werden.

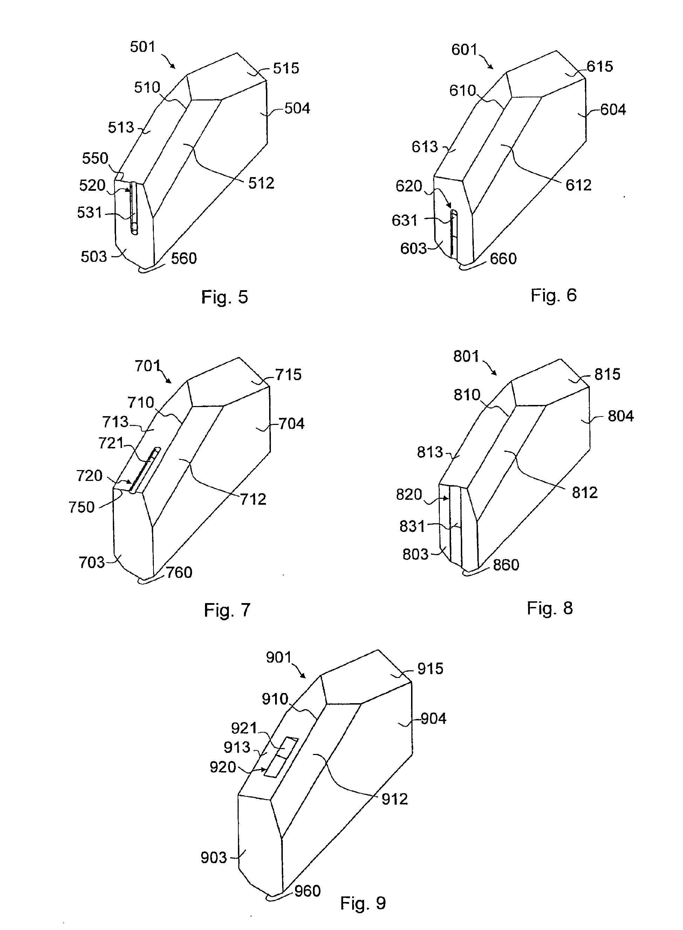

In den Figuren 5 bis 9 sind weitere erfindungsgemäße Ausführungen des Hartmetallkopfs dargestellt, wobei zur besseren Lesbarkeit der Figurenbeschreibung für identische und ähnliche Bestandteile der weiteren Ausführungen die gleichen Bezugsziffern wie bei der Ausführung gemäß den Figuren 1a bis 1d verwendet wurden, die um 400, 500, 600, 700 bzw. 800 erhöht sind.

Der Hartmetallkopf 501 unterscheidet sich von dem Harmetallkopf 101 gemäß Figur 1 a darin, dass die Vertiefung 520 keinen Stimflächenabschnitt 521 aufweist. Bei der Ausführungsform der Figur 5 erstreckt sich die Vertiefung 520 als Axialabschnitt 531 weg von der Übergangskante 550 entlang der Kurzseitenfläche 503 in axialer Richtung über etwa 2/3 der Gesamtlänge der Kurzseitenfläche 503. Stirnflächenseitig öffnet sich die rinnenförmige Vertiefung 520 in die Nachlaufstirnfläche 513 im Wesentlichen halbkreisförmig.

Der Bohrkopf 601 unterscheidet sich von dem Bohrkopf 501 gemäß Figur 5 dadurch, dass sich die Vertiefung 620 von der Übergangskante 660 hin zur Stirnfläche 613 des Hartmetallbohrkopfs 601 erstreckt. Der Verschleißmarker erstreckt sich über etwa 2/3 der axialen Gesamtlänge der Kurzseitenfläche 603. Die im Querschnitt U-förmige Vertiefung 620 erstreckt sich bis zur Montagefläche 606 und öffnet sich in diese im Wesentlichen halbkreisförmig.

Der Hartmetallkopf 701 unterscheidet sich von dem Hartmetallkopf gemäß Figur 101 darin, dass bei der Vertiefung 720 ausschließlich ein Stirnflächenabschnitt 721 vorgesehen ist, der parallel zur Schneidkante 710 verläuft. Die verschleißindizierende Rinne 720 erstreckt sich etwa von der Mitte der Nachlaufstirnfläche 713 zum äußersten radialen Begrenzungsrand 760 der Nachlaufstimfläche 713, an dem die Nachlaufstimfläche 713 in die Kurzseitenfläche 703 mündet. Die Vertiefung 720 ist an der radial äußersten Seite nicht begrenzt und öffnet sich in die Kurzseitenfläche 703, so dass in der Kurzseitenfläche 703 eine dem Querschnitt der Vertiefung entsprechende Ausnehmung besteht.

Der Hartmetallkopf 801 unterscheidet sich von dem Hartmetallkopf 301 gemäß Figur 3a darin, dass die sich entlang der Kurzflächenseite 803 erstreckende Verschleißmarkerrinne 820 etwa doppelt so breit und etwa halb so tief ausgebildet ist.

Der Hartmetallbohrkopf 901 unterscheidet sich von dem Hartmetallbohrkopf 201 gemäß Figur 2a darin, dass die Vertiefung 920 des Verschleißmarkers keilförmig ist. Im Querschnitt gesehen ist die Vertiefung 920 dreieckig, wobei eine Langseite des Dreiecks der Öffnung der Nut in die Nachlaufstimfläche 913 entspricht, und die Dreieckskurzseiten aufeinander zulaufend in die Nachlaufstirnfläche 913 eindringen, um einen Nutboden auszubilden. Die Tiefe der Vertiefung 920 nimmt zur Schneidkante 910 hin zu.

Bezüglich der Figuren 5 bis 9 sollte verstanden werden, dass aus Gründen der Einfachheit der Darstellung lediglich ein Verschleißmarker gezeigt ist, ein zweiter Verschleißmarker jedoch punktsymmetrisch zur Mittelachse des Hartmetallbohrkopfs ebenso vorgesehen sein könnte.

In den Figuren 10a bis 10d ist eine erfindungsgemäße Weiterbildung eines Hartmetallkopfs als Bohrkopf in Kreuz- oder X-Form dargestellt. Wie insbesondere in Figur 10d ersichtlich ist, erstrecken sich vier Arme von einer gemeinsamen, durch die Drehachse des Bohrers definierten Mitte nach radial außen. Die Kreuz- oder X-Arme werden radial außen durch die Kurzseitenflächen 1103, 1105, 1107, 1109 begrenzt. Ein jeweiliger Zwischenraum zwischen zwei X- oder Kreuzarmen wird durch die Übergangsbereiche 1180, 1182, 1184, 1186 überspannt. Der Hartmetallbohrkopf 1101 kann mit einer Montageseite 1106 an einem nicht dargestellten Stirnende eines Bohrerschafts befestigt werden. Der Montageseite 1106 liegt diametral eine Stirnfläche 1108 gegenüber. Diese wird durch die Hauptschneidkante 1110 und die Nebenschneidkanten 1140, 1142 in Nachlaufstirnflächen 1113, 1115, 1117, 1119 und Vorlaufstirnflächen 1112, 1114, 1116, 1118 gegliedert.

Wie insbesondere Figur 1a zeigt, ist in der Nachlaufstimfläche 1113 ist eine im Wesentlichen parallel zur Hauptschneidkante 1110 verlaufende Vertiefung 1120 eingelassen, die sich als Stirnflächenabschnitt 1121 bis zum äußersten Ende des Kreuz- oder X-Arms erstreckt. Das äußerste radiale Ende wird durch die Kante 1150 festgelegt, an der die Kurzseitenfläche 1103 mit der Nachlaufstirnfläche 1113 zusammentrifft. Die Vertiefung 1120 setzt sich in der Kurzseitenfläche 1103 in axialer Richtung in einem Axialabschnitt 1131 fort. Die Länge des Stimflächenabschnitts 1121 der Vertiefung 1120 beträgt etwa 2/3 der Radialgesamtlänge der Nachlaufstimfläche 1113. Die axiale Länge des Axialabschnitts 1131 beträgt etwa 3/4 der maximalen axialen Länge der Kurzseitenfläche 1103.

Die Vertiefung 1120 ist konkav als eine Rinne ausgebildet. Sowohl das montageseitige Ende des Axialabschnitts 1131 als auch das mittelachsenseitige Ende des Stirnflächenabschnitts 1121 sind wannenendenförmig begrenzt.

Bei einer in den Figuren 11a bis 11d dargestellten elften erfindungsgemäßen Ausführung eines Hartmetallkopfs sind zur besseren Lesbarkeit der Figurenbeschreibung zur Vermeidung von Wiederholungen für identische oder ähnliche Bauteile des Bohrkopfs der zehnten Ausführung die gleichen Bezugsziffern wie bei der Ausführung gemäß den Figuren 10a bis 10d verwendet, die um 100 erhöht sind.

Der Bohrkopf 1201 unterscheidet sich von dem Bohrkopf 1101 darin, dass ein Verschleißmarker an allen vier Kurzseitenflächen 1203, 1205, 1207, 1209 vorgesehen ist, der sich als eine lineare axiale Erhebung 1220, 1222, 1224, 1226 rippenförmig entlang der Kurzseitenflächen 1203, 1205, 1207, 1209 erstreckt. Die Rippen 1220, 1222, 1224, 1226 sind jeweils etwa in der Umfangsmitte der Kurzseitenflächen 1203, 1205, 1207 und 1209 angeordnet, um die Zusatzmasse der Rippen gleichmäßig um die Drehachse des Bohrkopfes zu verteilen und damit einen ruhigen Lauf des Bohrers zu erreichen. Die Rippen erstrecken sich entlang der gesamten Kurzseitenfläche von der Montagefläche 1106 bis zu der jeweiligen Nachlaufstirnflächen 1213, 1215, 1217, 1219.

In den Figuren 12a bis 12d ist eine zwölfte erfindungsgemäße Ausführung eines Hartmetallkopfs dargestellt, wobei zur besseren Lesbarkeit der Figurenbeschreibung für identische oder ähnliche Bestandteile des Hartmetallkopfs der zwölften Ausführung die gleichen Bezugsziffern wie bei der Ausführung gemäß den Figuren 10a bis 10d verwendet wurden, die um 200 erhöht sind.

Der Hartmetallkopf 1301 unterscheidet sich von dem Hartmetallkopf 1301 dadurch, dass zur Verschleißindizierung in allen Nachlaufstirnflächen 1313, 1315, 1317, 1319 eine Vertiefung 1320, 1322, 1324, 1326 als kurze Rinne, Kerbe oder wannenförmige Nut angeordnet ist. Die Vertiefungen 1320, 1322 erstrecken sich parallel zu der Hauptschneide 1310, die Vertiefungen 1324, 1326 hingegen parallel zu den Nebenschneidkanten 1342, 1340 in Radialrichtung. Die Vertiefungen 1320, 1322, 1324, 1326 erstrecken sich etwa über 1/4 der radialen Gesamtlänge der jeweiligen Nachlaufstirnfläche 1313, 1315, 1317, 1319 und sind in der radial äußeren Flächenhälfte der Nachlaufstirnfläche 1313, 1315, 1317, 1319 angeordnet, erstrecken sich jedoch nicht bis zum äußersten radialen Rand.

In den Figuren 13a bis 13d ist eine dreizehnte erfindungsgemäße Ausführung eines Hartmetallkopfs dargestellt, wobei zur besseren Lesbarkeit für identische oder ähnliche Bestandteile des Hartmetallkopfs der zehnten Ausführung die gleichen Bezugsziffern wie bei der Ausführung gemäß den Figuren 10a bis 10d verwendet wurden, die um 300 erhöht sind.

Der Bohrkopf 1401 unterscheidet sich von dem Bohrkopf 1201 gemäß Figur 11 darin, dass einerseits die rippenförmige Erhebung 1420 nur an einer Kurzseitenfläche 1403 ausgebildet ist und andererseits sich die Erhebung 1420 in Axialrichtung nicht über die gesamte Kurzseitenfläche 1403 erstreckt, sondern lediglich etwa über die Hälfte deren Gesamtlänge wie in Figur 13c ersichtlich ist. Die erstreckt sich Erhebung von der Übergangskante 1460 bis etwa zur Mitte der Kurzseitenfläche 1403.

In den Figuren 14 bis 18 sind weitere Ausführungen erfindungsgemäßer Hartmetallköpfe dargestellt, wobei zur besseren Lesbarkeit für identische und ähnliche Bestandteile des Hartmetallkopfs der zehnten Ausführung die gleichen Bezugsziffern wie bei der Ausführung gemäß den Figuren 10a bis 10d verwendet wurden, die um 400, 500, 600, 700 bzw. 800 erhöht sind.

Der Hartmetallkopf 1501 der Figur 14 unterscheidet sich von dem Hartmetallbohrkopf der Figur 10a darin, dass die Vertiefung 1520 sich nicht in der Nachlaufstimfläche 1513 fortsetzt, sonder sich nur als Axialabschnitt 1531 über etwa 2/3 der axialen Kurzseitenflächenlänge erstreckt. Die Vertiefung mündet an der Übergangskante 1550 zwischen Kurzseitenfläche 1503 und Nachlaufstimfläche 1513 und öffnet sich in die Nachlaufstimfläche 1513 hinein, so dass in der Nachlaufstimfläche 1513 eine Ausnehmung in Form des Vertiefungsquerschnitts gebildet ist.

Der Hartmetallbohrkopf 1601 unterscheidet sich von dem Bohrkopf 1501 darin, dass sich die Vertiefung 1620 nicht zur Übergangskante 1650 mit der Nachlaufstirnfläche 1613 sondern zur Übergangskante 1660 mit der Montageseite erstreckt und in diese hinein öffnet. Die Vertiefung 1620 ist stirnflächenseitig wannenendenförmig begrenzt und ist im Vergleich zu dem Ausführungsbeispiel der Figur 14 in Richtung der Vorlaufstirnfläche 1612 leicht umfangsversetzt.

Der Hartmetallbohrkopf 1701 der Figur 16 unterscheidet sich von der Ausführungsform der Figur 10a darin, dass der Axialabschnitt 1731 der Vertiefung 1720 nicht in Richtung der Montageseite begrenzt ist, sondern sich entlang der gesamten Kurzseitenfläche 1703 erstreckt und sich in die Montagefläche hinein öffnet, so dass in der Montagefläche eine der Querschnittsform der Vertiefung entsprechende Ausnehmung gebildet ist.

Der Hartmetallbohrkopf 1801 der Figur 17 unterscheidet sich von dem Bohrkopf 1701 der Figur 16 darin, dass eine zweite gleichermaßen ausgebildete Vertiefung 1822 punktsymmetrisch zur Drehachse des Bohrers und diametral gegenüberliegend der ersten Vertiefung 1820 vorgesehen ist.

Der Hartmetallbohrkopf 1901 der Figur 18 unterscheidet sich von dem in der Figur 11 a dargestellten Hartmetallbohrkopf 1201 darin, dass einerseits eine Erhebung 1920 nur an einem der vier X- oder Kreuzarme vorgesehen ist und andererseits darin, dass der Axialabschnitt 1931 sich über die Übergangskante 1950 hinwegerstreckt und entlang der Nachlaufstirnfläche 1913 als lineare Rippe parallel zur Hauptschneidkante 1910 fortgesetzt wird.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 101, 201, 301, 401, 501, 601, 701, 801, 901,:
- 1101, 1201, 1301, 1401, 1501, 1601, 1701,:
- 1801, 1901: Hartmetallplatte
- 102, 104, 202, 204, 302, 304, 402, 404, 502,:
- 504, 602, 604 , 702, 704, 802, 804, 902, 904: Langseitenflächen
- 103, 105, 203, 205, 303, 305, 403, 405, 503,:
- 603, 703, 803, 903, 1103, 1105, 1107, 1109,:
- 1203, 1205, 1207,1209, 1303, 1305, 1307,:
- 1309, 1403, 1405, 1407,1409, 1503, 1507, 1603,:
- 1607, 1703, 1707, 1803,1805, 1807, 1903, 1907: Kurzseitenflächen
- 106, 206, 306, 406, 506, 606, 706, 806, 906,:
- 1106, 1206, 1306, 1406, 1506, 1606, 1706,:
- 1806, 1906: Montageseite
- 108, 208, 308, 408, 508, 608, 708, 808,:
- 908, 1108, 1208, 1308, 1408, 1508, 1608,:
- 1708, 1808, 1908: Stirnfläche
- 113, 115, 213, 215, 313, 315, 413, 415,:
- 513, 515, 613, 615, 713, 715, 813, 815,:
- 913, 915, 1113, 1115, 1117,1119,1313,1315,:
- 1317,1319,1513,1613,1913: Nachlaufstimfläche
- 112, 114, 212, 214, 312, 314, 412, 414,:
- 512, 612, 712, 812, 912, 1112, 1114, 1116,:
- 1118, 1312, 1314, 1316,1318, 1612: Vorlaufstirnfläche
- 110, 210, 310, 410, 510, 610, 710, 810,:
- 910, 1110, 1210, 1310, 1410, 1710, 1810,:
- 1910: Hauptschneidekante
- 120, 122, 220, 222, 310, 322, 520, 620,:
- 720 ,820, 920, 1120, 1320,1322, 1324, 1326,:
- 1520, 1620, 1720, 1820,1822: Vertiefung
- 420, 422, 1220, 1222, 1224, 1226, 1420,:
- 1920: Erhebung
- 121, 123, 221, 223, 421, 423, 721, 921,:
- 1121, 1721, 1821, 1823, 1921: Stimflächenabschnitt
- 131, 331, 333, 431, 433, 531, 631, 831,:
- 1131, 1231, 1233,1731,1831,1931: Axialabschnitt
- 136, 138: Montageflächen
- 150, 350, 450, 550, 750, 1150, 1250,:
- 1550, 1650, 1750, 1850, 1950: Verbindungskante
- 160, 260, 360, 460, 560, 660, 760, 860,:
- 960, 1160, 1260, 1360, 1460, 1660, 1760,:
- 1860, 1960: Verbindungskante
- 180, 182: Verbindungsflächen
- 1140, 1142: Nebenschneidkanten
- 1180, 1182, 1184, 1186: Übergangsbereiche

## Patentansprüche

1. Hartmetallkopf für ein Werkzeug zum Bearbeiten von Feststoffmaterial, wie Gestein, Beton, der zum Befestigen an einem Ende eines Schafts des Werkzeugs ausgelegt ist und eine dem zu bearbeitenden Feststoffmaterial zuzuwendende Stirnfläche (108 bis 908, 1108 bis 1908) sowie eine im wesentlichen längs des Schaftes, vorstehende Seitenfläche (103 bis 903, 105 bis 905, 1103 bis 1903, 1105 bis 1905, 1107 bis 1907, 1109 bis 1909) aufweist, **dadurch gekennzeichnet, dass** in der Stirnfläche und/oder in der Seitenfläche eine als eine Vertiefung (120, 122, 220, 222, 320, 322, 520, 620, 720, 820, 920, 1120, 1320, 1322, 1324, 1326, 1520, 1620, 1720, 1820, 1822) und/oder Erhebung (420, 422, 1220, 1222, 1224, 1226, 1420, 1920) ausgebildete Verschleißmarkierung eingearbeitet ist.

2. Hartmetallkopf nach Anspruch 1, **dadurch gekennzeichnet, dass** die Vertiefung (120, 122, 220, 222, 320, 322, 520, 620, 720, 820, 920, 1120, 1320, 1322, 1324, 1326, 1420, 1520, 1620, 1720, 1820, 1822) frei und unbelegt und/oder die Erhebung (420, 422, 1220, 1222, 1224, 1226, 1920) einstückig mit dem Hartmetallkopf ausgebildet ist.

3. Hartmetallkopf nach Anspruch 1 oder 2, **dadurch gekennzeichnet, dass** sich eine seitenflächige Vertiefung (120, 122, 320, 322, 520, 620, 820, 1120, 1520, 1620, 1720, 1820, 1822) und/oder Erhebung (420, 422, 1220, 1222, 1224, 1226, 1420, 1920) geradlinig vorzugsweise parallel zu einer Axialrichtung des Schaftes und/oder eine stirnflächige Vertiefung (120, 122, 220, 222, 720, 820, 920, 1120, 1320, 1322, 1324, 1326, 1720, 1820, 1822) und/oder Erhebung (420, 422, 1920) radial hin zu einer Drehachse des Schaftes erstreckt, wobei insbesondere die seitenflächige Vertiefung und/oder Erhebung und die stirnflächige Vertiefung und/oder Erhebung vorzugsweise unterbrechungsfrei und/oder an einer Übergangskante (150, 450, 1150, 1750, 1850, 1950) zwischen der Stirnfläche (108, 408, 1108, 1708, 1808, 1908) und der Seitenfläche (103, 105 403, 405, 1103, 1703, 1803, 1805, 1903) ineinander übergehen.

4. Hartmetallkopf nach einem der vorstehenden Ansprüche , **dadurch gekennzeichnet, dass** sich eine stirnflächige Vertiefung (120, 122, 220, 222, 720, 920, 1120, 1320, 1322, 1324, 1326, 1720, 1820, 1822) und/oder Erhebung (420, 422, 1920) nur über einen Teil des Radialabstands zwischen einem drehachsigen Mittelpunkt der Stirnfläche (108, 208, 408, 708, 908, 1108, 1308, 1708, 1808, 1908) und einer radialen Endkante (150, 250, 450, 750, 950, 1150, 1350, 1750, 1850, 1950) erstreckt, wobei insbesondere die stirnflächige Vertiefung (120, 122, 220, 222, 720, 920, 1120, 1320, 1322, 1324, 1326, 1720, 1820, 1822) und/oder Erhebung (420, 422, 1920) den drehachsigen Mittelpunkt nicht erreicht und/oder sich über höchstens ein Drittel des maximalen Abstands zwischen dem drehachsigen Mittelpunkt der Stirnfläche und einer radialen Endkante der Stirnfläche erstreckt.

5. Hartmetallkopf nach einem der vorstehenden Ansprüche , **dadurch gekennzeichnet, dass** sich eine seitenflächige Vertiefung (120, 122, 320, 322, 420, 422, 520, 620, 820, 1120, 1220, 1222, 1224, 1226, 1420, 1520, 1620, 1720, 1820, 1822, 1920) über mehr als die Hälfte, vorzugsweise über die gesamte Länge zwischen einer Übergangskante (350, 1250, 1750, 1850, 1950) zwischen der Stirnfläche und der Seitenfläche und einer axialen Endkante ( 360, 1260, 1760, 1860, 1960) der Seitenfläche, der maximalen axialen Ausdehnung der Seitenfläche erstreckt und/oder eine seitenflächige Vertiefung (520, 620, 1220, 1720, 1820, 1822) und/oder Erhebung (1920) in einer Umfangsrichtung mittig positioniert ist.

6. Hartmetallkopf nach einem der vorstehenden Ansprüche , **dadurch gekennzeichnet, dass** die Vertiefung (120, 122, 220, 222, 320, 322, 520, 620, 720, 820, 1120, 1320, 1322, 1324, 1326, 1520, 1620, 1720, 1820, 1822) und/oder Erhebung (420, 422, 1220, 1222, 1224, 1226, 1420, 1920) als Rinne bzw. Rippe ausgebildet ist, die vorzugsweise geradlinig ist und/oder eine konstante Tiefe bzw. Höhe in deren Längsrichtung aufweist und/oder einen Rinnenboden bzw. Rippenrücken umfasst, der konkav bzw. konvex vorzugsweise mit einer gleichbleibenden Krümmung geformt ist.

7. Hartmetallkopf nach einem der vorstehenden Ansprüche , **dadurch gekennzeichnet, dass** er als eine Schneidplatte (201, 301, 501, 601, 701, 801, 901) geformt ist und eine dachförmige Stirnfläche (208, 308, 508, 608, 708, 808, 908), zwei sich gegenüberliegende Kurzseitenflächen (203, 205, 303, 305, 503, 603, 703, 903), zwei sich gegenüberliegende Langseitenflächen (202, 204, 302, 304, 504, 604, 704, 904) und eine der Stirnfläche gegenüberliegende, dem Schaft zuzuwendende Montageseite umfasst, wobei eine Vertiefung (220, 222, 320, 322, 520, 620, 720, 820, 920) ausschließlich an einer der beiden Kurzseitenflächen (303, 305, 503, 505, 603, 605, 803, 805) und/oder der Stirnfläche (208, 708, 908) ausgebildet ist.

8. Hartmetallkopf nach einem der vorstehenden Ansprüche 1 bis 6, **dadurch gekennzeichnet, dass** er in einer Kreuz- oder X-Form mit vier von einer gemeinsamen Mitte, die eine axiale Drehachse durchsetzt, wegerstreckende Arme gestaltet ist, wobei die stirnflächige Vertiefung (1120, 1720, 1820, 1822) und oder Erhebung (1920) und/oder die seitenflächige Vertiefung (1520, 1620) und/oder Erhebung (1420) ausschließlich an einem der Arme oder an zwei sich gegenüberliegenden Armen ausgebildet sind.

9. Hartmetallkopf nach einem der vorstehenden Ansprüche, **dadurch gekennzeichnet, dass** die Stirnfläche eine sich im wesentlichen über die ganze radiale Ausdehnung der Stirnfläche erstreckende Hauptschneidkante aufweist, die die Stirnfläche drehrichtungsgemäß in eine Vorlaufstirnfläche und eine Nachlaufstirnfläche unterteilt, wobei die stirnflächige Vertiefung und/oder Erhebung insbesondere mittig in der Nachlaufstirnfläche eingearbeitet ist.

10. Werkzeug, insbesondere Bohrer, zum Bearbeiten von Feststoffmaterial, wie Gestein, Beton, mit einem Schaft und einem nach einem der vorstehenden Ansprüche ausgebildeten, an einem Ende des Schafts befestigten Hartmetallkopf (101 bis 901, 1101 bis 1901).
